# EUROPEAN PATENT SPECIFICATION

(11) **EP 0 691 161 B1**
(45) Date of publication and mention of the grant of the patent: **29.09.1999**
(21) Application number: 94830342.5
(22) Date of filing: 07.07.1994
(51) Int. Cl.: B05B 11/00, F16F 1/08

(54) **A device for dispensing pastes or liquids from bottles or the like**
Vorrichtung zur Abgabe von pastösen oder flüssigen Substanzen aus Flaschen oder ähnlichen Behältern
Dispositif pour délivrer un produit pâteux ou liquide contenu dans une bouteille ou équivalent

(43) Date of publication of application: 10.01.1996
(73) Proprietor: SAR S.p.A., I-66020 San Giovanni Teatino (Chieti) (IT)
(72) Inventor: Mascitelli, Francesco, I-66020 San Giovanni Teatino (CH) (IT)
(74) Representative: Lanzoni, Luciano

(56) References cited:
- EP-A- 0 547 439
- DE-A- 2 063 786
- FR-A- 2 065 790
- FR-A- 2 144 105
- FR-E- 96 205

## Description

The invention relates to a dispensing device for quantities of paste or liquid substance from bottles and the like, and refers in particular to manually-activated pumps comprised in the dispensers.

Dispensers available on the market comprise, apart, obviously from a bottle, a pump applied at the bottle mouth, and constrained thereto by a collar, generally of the screw-on kind.

The pump comprises a hollow, substantially cylindrical body, open at two ends, and a no-return valve at a first of the two ends, while at the other end a hollow cylindrical stem projects, which stem is mobile in two directions coaxial to the hollow body and partially within the same hollow body.

The stem bears a dispenser button of a dispenser nozzle, in communication with the stem itself.

Known-type dispensers also comprise a piston, situated inside the hollow body and mobile between two predetermined positions on the stem, and coaxial to the same stem. The piston, the no-return valve, the bottom end of the stem and the walls of the hollow body together create a pressure chamber. The top end of the stem exhibits at least one aperture for communication between the inside of the stem and the inside of the hollow body. The piston, therefore, is inserted on the stem and is sealedly mobile in two directions with respect to the stem, in order to open or close the aperture of the stem. Movement of the piston towards the stem uncovers at least one aperture so that the pressure chamber is placed in communication with the nozzle. Displacing the piston in a contrary direction closes the aforementioned aperture and therefore communication. The pump further comprises first elastic recall means, acting between the hollow body and the piston, to bring the piston into its rest position with respect to the stem, wherein the apertures in the stem are closed when no pressure is exerted on the dispenser button, and further comprises second elastic recall means to bring the stem into its rest position with respect to the hollow body, a position in which the stem maximally projects from the hollow body.

Known-type dispensers contain some metal parts, especially the no-return valve, and the first and second types of elastic recall means. Said first and second recall means are constituted by metal helix springs, and both of them come into contact with the substance being dispensed, so that they can react chemically with the substance and possibly pollute it. This also leads to corrosion of the metal parts, which can hamper the functioning of the pump.

Further, the presence of metal parts in the pump creates considerable problems from a point of view of recuperation and recycling of the materials constituting the dispenser once the product contained therein has been used up. Since the metal parts cannot be removed by dismounting the entire pump, in order to recycle the plastic material constituting the dispenser device the pump has to be thrown away in its entirety.

Such problems and drawbacks have already been addressed by the same applicant, who is the owner of several patents, for example Italian patent application no.21196 A/90, whrein the no-return valve, constituted by a metal sphere, is substituted by a specially-shaped plastic valve. In a further patent application, EP-A-0 547 439, the first elastic recall means are constituted by a deformable plastic skirt and the second elastic means by a plastic bellows-shaped annular element, substantially cylindrical and associated to the dispensing button.

From all of the above, it can be understood that the dispensing device does not place metal parts in contact with the dispensed substance, thus solving the problem of pollution.

The type of dispenser described, while constituting a considerable step forward with respect to known-type dispensers, does not resolve all of the drawbacks contained therein. Indeed, the applicant's previous dispensers are all subject to some limitations conditioning their mechanical characteristics to the point that over a long period of time of use the pump could begin to malfunction. In particular, the second recall means are made from a bellows annular element, made in polyethylene. Unfortunately, over a period of time the polyethylene, and therefore the recall means, undergoes a permanent deformation and loses its mechanical/elastic characteristic, and suffers a subsequent deterioration in dispenser functionality.

The aim of the present invention is thus to obviate the above drawbacks of known-type dispenser devices.

The invention, as it is characterised in the following claims, solves the problem by providing a dispenser device for pastes or liquids in bottles or the like, comprising a collar for fixing a manual pump to the mouth of a bottle, which pump dispenses a substance contained in the bottle, and comprises: a hollow cylindrical plastic body which is open at two ends; a plastic no-return valve at a first of the two ends, to which first end a tube is applied, which tube contacts the substance contained in the bottle; a hollow cylindrical plastic stem coaxial to the hollow body, partially housed in said body and axially mobile in two directions with respect to the hollow body, one end of said hollow stem projecting externalwise through a second of the two ends of the hollow body and bearing a dispensing button, an opposite end of the hollow stem exhibiting at least one aperture creating communication between an inside of the stem and an inside of the hollow body; a hollow plastic piston, partially housed in the hollow body and internally and coaxially housing the hollow stem, and being slidable in two directions with respect to said hollow stem at least between an open position and a closed position of apertures exhibited by the hollow stem; a pressure chamber created by internal walls of the hollow body, of the no-return valve, by a lower end of the hollow stem and by the piston; an annular closure element of the upper end of the hollow body functioning also as a guide for the hollow stem; a connection channel made in the pump to place in communication an internal environment of the bottle with an outside environment, said connection channel being interupted when the piston is in a rest position; first elastic means for recalling the piston into a fully advanced position, or the rest position, with respect to the hollow stem, wherein the communication apertures between the hollow stem and the pressure chamber are closed; second elastic means for recalling the hollow stem into its maximally-projecting position from the hollow body at an end of an action of pressure on a dispensing button, which is characterised in that the second elastic means are constituted by a conical helix torsion spring made in deformable plastic material, which deforms when the dispensing button is pressed, arranged exhibiting a smaller base in contact with a lower part of the dispensing button and a larger base in contact with a flat surface exhibited by the collar.

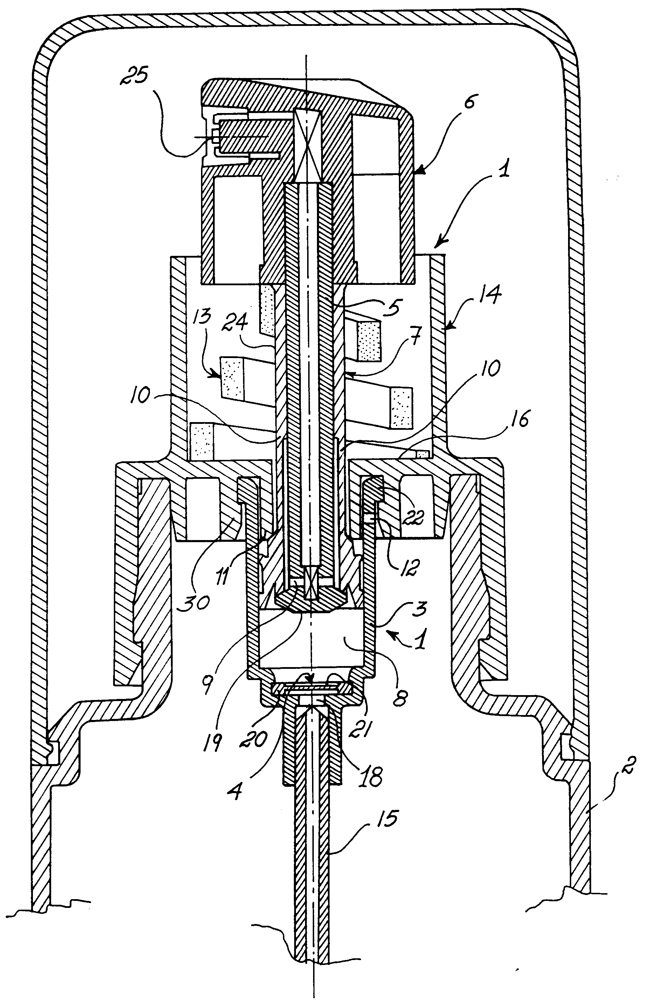

Further characteristics and advantages of the present invention will better emerge from the detailed description that follows, of an embodiment of the invention, illustrated in the form of a non-limiting example in the accompanying drawings, in which:
- the figure is a section of the dispenser device according to the invention.

With reference to the invention, the figures shows a dispenser device which hereinafter will be described in detail, including the known part of it, in order to achieve a better description of the invention itself.

The dispenser device comprises a collar 14 for fixing a manual pump 1 to a mouth of a bottle 2, which pump 1 enables a liquid contained in the bottle 2 to be dispensed. The manual pump 1 comprises a plastic cylindrical and hollow body 3, open at two ends 18 and 30, and further comprises a plastic no-return valve 4 at a lower 18 of the two ends 18 and 30. A tube is applied 15 in proximity of the lower end 18, for conducting the paste or liquid substance in the bottle to the dispenser.

The pump 1 further comprises a plastic hollow stem 5, coaxial to the hollow body 3. The hollow stem 5, as shown in the figure, is partially housed in the hollow body 3 and is axially mobile in two directions with respect to the body 3. One end of the hollow stem 5 projects externalwise through the second end 30 of the hollow body 3 and bears a dispenser head 6, while an opposite end of the hollow stem 5 exhibits at least one aperture 9 for communication between an inside of the stem 5 and an inside of the hollow body 3. 7 denotes a plastic hollow piston, also partially housed in the hollow body 3 and internally and coaxially housing the hollow stem 5. The piston 7 is slidable in two directions with respect to the hollow stem 5, at least between two positions, one open and one closed, of the apertures 9 exhibited by the hollow stem 5.

The hollow stem 5 exhibits, in proximity of the apertures 9, a rest base 19 for the piston 7, which constitutes an obturator valve for permitting or obstructing communication between the inside of the hollow body 3 and the inside of the hollow stem 5.

A pressure chamber 8 is created by the internal walls of the hollow body 3, the no-return valve 4 and the lower end 18 of the hollow stem 5, and especially by the hollow piston 7. The no-return valve 4 allows the substance being dispensed to enter into the pressure chamber 8, but not to exit back. The valve 4, exhibiting an annular edge 20, is housed in a seat fashioned in the hollow body 3.

A circular wall 21 contacts a tract of the annular edge 20 and rests on an edge of the first end 18 such as to close it; by action of the substance drawn through the tube 15, the circular wall 21 can flex internalwise of the pressure chamber 8, enabling the substance to be dispensed to enter the chamber. Close to the upper edge of the wall of the hollow body 3, a connection channel 12 is provided, the function of which will be explained in more detail hereinafter.

The piston 7 is constituted by a hollow cylindrical tube comprising a lower part or skirt 17, with a thinner cylindrical wall, and an upper part 24 having a greater cylindrical wall breadth. As shown in the figure, the skirt 17 is distanced both from the stem 5 and from an annular closure element 11, fashioned on the collar 14, which apart from having a sealing function is also a guide for the hollow stem 3.

13 denotes a conical helix torsion spring, made in plastic, which is elastically deformable when the dispenser button 6 is depressed. The spring 13 exhibits a rectangular section, with its smaller base in contact with the lower part of the dispenser button 6 and its larger base in contact with a flat surface 16 exhibited by the collar 14. The spring 13 replaces the known cylindrical bellows structure and provides a considerable elastic reaction which will last over a long period of time. Thus the pump 1 comprises two elastic means, a first constituted by the skirt 17 and a second constituted by the spring 13, working in combination.

All of the pump 1 components are advantageously made in plastic, such as to solve all problems connected with recycling.

The dispenser device functions as follows.

By depressing the dispenser button 6 downwards, the piston 7 and the hollow stem 3 are also drawn downwards, compressing the air contained in the pressure chamber 8, closed by the no-return valve 4. At the end run of the piston 7, by continuing to press the button 6 the skirt 17 barrels out elastically externalwise. Thus a passage is created between the pressure chamber 8 and the inside of the stem 5, through the apertures 9, which enables the pressurised air in the chamber 8 to exit through a nozzle 25 on the button 6. The dispenser button 6 when released returns into the initial position, thanks to the return spring 13 and draws the piston 7 and the hollow stem 5 with it. Communication between the chamber 8 and the hollows stem 5 is closed by stopping the deformation of the skirt 17. A depression is thus created in the chamber 8 causing the opening of the valve 4 and the chamber to fill 8 with a predetermined quantity of paste or liquid. The connection channel 12 serves to admit into the bottle a volume of air which is equivalent to the volume of the substance dispensed on activating the pump.

## Claims

1. A dispenser device for pastes or liquids in bottles or the like, comprising a collar (14) for fixing a manual pump (1) to a mouth of a bottle (2), which pump (1) dispenses a substance contained in the bottle (2), and comprises: a hollow cylindrical plastic body (3) which is open at two ends; a plastic no-return valve (4) at a lower (18) of the two ends, to which lower end (18) a tube is applied (15), which tube (15) entrains the substance contained in the bottle (2); a hollow cylindrical plastic stem (5) coaxial to the hollow body (3), partially housed in said body (3) and axially mobile in two directions with respect to the hollow body (3), one end of said hollow stem (5) projecting externalwise through an upper (30) of the two ends of the hollow body (3) and bearing a dispensing button (6), an opposite end of the hollow stem (5) exhibiting at least one aperture (9) creating communication between an inside of the hollow stem (5) and an inside of the hollow body (3); a hollow plastic piston (7), partially housed in the hollow body (3) and internally and coaxially housing the hollow stem (5), and being slidable in two directions with respect to said hollow stem (5) at least between an open position and a closed position of apertures (9) exhibited by the hollow stem (5); a pressure chamber (8) being created by internal walls of the hollow body (3), of the no-return valve (4), by a lower end of the hollow stem (5) and by the piston (7); an annular closure element of the upper end of the hollow body (3) functioning also as a guide for the hollow stem (5); a connection channel (12) being made in the pump (1) to place in communication an internal environment of the bottle (2) with an outside environment, said connection channel (12) being obstructed when the piston (7) is in a rest position; first elastic means (10) for recalling the piston (7) into a fully advanced position, or the rest position, with respect to the hollow stem (5), wherein the communication apertures (9) between the hollow stem (5) and the pressure chamber (8) are closed; second elastic means (13) for recalling the hollow stem (5) into its maximally-projecting position from the hollow body (3) at an end of an action of pressure on the dispensing button (6); characterised in that the second elastic means (13) are constituted by a conical helix torsion spring made in deformable plastic material, which deforms when the dispensing button is pressed (6), arranged exhibiting a smaller base in contact with a lower part of the dispensing button (6) and a larger base in contact with a flat surface (16) exhibited by the collar (14).

2. A dispensing device as in claim 1, characterised in that the second recall means (13) elastically combine and cooperate with the first recall means constituted by a plastic and elastically deformable skirt (17).

3. A dispensing device as in claim 1, characterised in that a bar constituting the conical helix torsion spring has a rectangular section.

4. A dispensing device, as in claim 1, characterised in that all of the parts constituting the dispensing device are made of a plastic material.

## Patentansprüche

1. Vorrichtung zur Abgabe Von Pasten oder Flüssigkeiten aus Flakons oder ähnlichen, umfassend einen Schraubring (14) zur Befestigung einer Handpumpe (1) am Hals des Flakons (2), um aus dem Flakon (2) das in ihm enthaltene Mittel abzugeben, umfassend: ein im wesentlichen zylindrisches Gehäuse (3) aus Kunststoff, das an seinen beiden Enden offen ist; ein Rückschlagventil (4) aus Kunststoff im Bereich eines ersten der beiden Enden, an welchem ein Röhrchen (15) angebracht ist, das in das, das abzugebende Mittel enthaltende Flakon (2) eintaucht; einen im wesentlichen zylindrischen, zum Gehäuse (3) koaxialen Hohlschaft (5), der teilweise im Gehäuse (3) aufgenommen und axial gegenüber dem Gehäuse (3) in beiden Richtungen beweglich ist, wobei ein Ende des Hohlschaftes (5) durch das zweite Ende des Hohlkörpers (3) hindurch nach außen vorsteht und eine Abgabetaste (6) trägt, wobei das abgewandte Ende des Hohlschaftes (5) mindestens eine Verbindungsöffnung (9) zwischen dem Inneren des Hohlschafts (5) und dem Inneren des Gehäuses (3) aufweist; einen Hohlkolben (7) aus Kunststoff, der gleichfalls teilweise im Gehäuse (3) aufgenommen ist, innen koaxial den Hohlschaft (5) aufnimmt und gegenüber dem Hohlschaft (5) mindestens zwischen zwei, vom Hohlschaft (5) aufgewiesenen Offen- und Schließstellungen (9) in beiden Richtungen gleitbar ist; eine Druckkammer (8), die durch die Innenwände des Gehäuses (3), durch das untere Ende des Hohlschaftes (5) und durch den Hohlkolben (7) festgelegt ist; ein ringförmiges Schließelement (11) des oberen Endes des Gehäuses (3), wobei dieses Schließelement auch als Führung für den Hohlschaft (5) dient; einen Verbindungskanal (12), der in der Pumpe (1) ausgenommen ist, uni das Innere des Flakons (2) mit außen zu verbinden, wobei dieser Verbindungskanal (12) unterbrochen ist, wenn sich der Hohlkolben (7) in der Ruhestellung Ruhestellung befindet; erste Rückholfedermittel (10), um den Hohlkolben (7) in seine vorgerückteste oder Ruhestellung gegenüber dem Hohlschaft (5) zurück zu bringen, in der die Verbindungsöffnungen (9) zwischen dem Hohlschaft (5) und der Druckkammer (8) geschlossen sind; zweite Rückholfedermittel (13), um den Hohlschaft (5) in seine gegenüber dem Gehäuse (3) höchst ausladendste Stellung bei Aufhören der Druckeinwirkung auf die Abgabetaste (6) zurück zu bringen; dadurch gekennzeichnet, daß die zweiten Rückholfedermittel (13) aus einer Torsionskegelfeder aus bei Niederdrücken der Abgabetaste (6) elastisch nachgiebigem Kunststoff besteht, die mit ihrer unteren Basis in Berührung mit dem unteren Teil der Abgabetaste (6) und mit ihrer größeren Basis in Anschlag mit einer vom Schraubring (14) aufgewiesenen, ebenen Fläche (16) angeordnet ist.

2. Abgabevorrichtung nach Anspruch 1, dadurch gekennzeichnet, daß die zweiten Rückholfedermittel (13) in Kombination und elastischer Mitwirkung mit den ersten Rückholfedermitteln wirken, die aus einem Mantel (17) elastisch nachgiebigen Kunststoffes bestehen.

3. Abgabevorrichtung nach Anspruch 1, dadurch gekennzeichnet, daß die Torsionskegelfeder einen rechteckigen Querschnitt des die Feder (13) verwirklichenden Stabes aufweist.

4. Abgabevorrichtung nach Anspruch 1, dadurch gekennzeichnet, daß alle die Abgabevorrichtung bildenden Teile in Kunststoff ausgeführt sind.

## Revendications

1. Dispositif pour délivrer ou distribuer des produits pâteux ou liquides contenus dans des bouteilles ou équivalents, comprenant un collier (14) de fixation d'une pompe manuelle (1) à une embouchure d'une bouteille (2), laquelle pompe (1) délivre un produit contenu dans la bouteille, et comporte: un corps cylindrique creux (3) en matière plastique qui est ouvert à ses deux extrémités; une soupape de retenue (4) en matière plastique située à celle inférieure (18) des deux extrémités, à ladite extrémité inférieure étant appliqué un tube (15), ce tube entraînant le produit contenu dans la bouteille (2); une tige cylindrique creuse (5) en matière plastique coaxiale avec le corps creux (3), partiellement logée dans ledit corps et mobile en sens axial selon deux directions par rapport au corps creux (3), une extrémité de ladite tige creuse (5) faisant saillie vers l'extérieur à travers celle supérieure (30) des deux extrémités du corps creux (3) et portant un bouton distributeur (6), une extrémité opposée de la tige creuse (5) présentant au moins une ouverture (9) créant la communication entre une partie intérieure de la tige creuse (5) et une partie intérieure du corps creux (3); un piston creux (7) en matière plastique partiellement logé dans le corps creux (3) et logeant à son intérieur et de manière coaxiale la tige creuse (5) et étant coulissant selon deux directions par rapport à ladite tige creuse (5) au moins entre un position ouverte et une position fermée des ouvertures (9) présentées par la tige creuse (5); une chambre de pression (8) étant créée par les parois intérieures du corps creux (3) de la soupape de retenue (4), par une extrémité inférieure de la tige creuse (5) et par le piston (7); un élément annulaire de fermeture de l'extrémité supérieure du corps creux (3) faisant également fonction de guidage pour la tige creuse (5); un canal de liaison (12) étant ménagé dans la pompe (1) pour mettre en communication le milieu intérieur de la bouteille (2) avec le milieu extérieur, ledit canal de liaison (12) étant bouché quand le piston (7) se trouve en position de repos; des premiers moyens élastiques (10) destinés à rappeler le piston (7) dans une position complètement avancée, ou position de repos, par rapport à la tige creuse (5), dans laquelle les ouvertures de communication (9) entre la tige creuse (5) et la chambre de pression (8) sont fermées, des deuxièmes moyens élastiques (13) destinés à rappeler la tige creuse (5) dans sa position de saillie maximum du corps creux (3) à la fin d'une action de pression sur le bouton distributeur (6); caractérisé en ce que les deuxièmes moyens élastiques (13) se composent d'un ressort de torsion hélicoïdal conique réalisé en matière plastique déformable qui se déforme quand on appuie sur le bouton distributeur (6), susceptible de présenter une petite base au contact d'une partie inférieure du bouton distributeur (6) et une grande base au contact d'une surface plate (16) présentée par le collier (14).

2. Dispositif distributeur selon la revendication 1, caractérisé en ce que les deuxièmes moyens de rappel (13) se combinent élastiquement et coopèrent avec les premiers moyens de rappel comportant une jupe en matière plastique élastiquement déformable.

3. Dispositif distributeur selon la revendication 1, caractérisé en ce qu'une barre formant le ressort de torsion hélicoïdal conique a une section rectangulaire.

4. Dispositif distributeur selon la revendication 1, caractérisé en ce que toutes les parties formant le dispositif sont réalisées en matière plastique.
